Europäisches Patentamt

European Patent Office

Office européen des brevets

(19)

(11) Publication number: **0 158 379**

**A1**

(12) **EUROPEAN PATENT APPLICATION**

(21) Application number: **85200294.8**

(22) Date of filing: **28.02.85**

(51) Int. Cl.⁴: **C 25 D 1/10**

(30) Priority: **02.03.84 NL 8400675**

(43) Date of publication of application:
**16.10.85 Bulletin 85/42**

(84) Designated Contracting States:
**DE FR GB NL**

(71) Applicant: **N.V. Philips' Gloeilampenfabrieken**
**Groenewoudseweg 1**
**NL-5621 BA Eindhoven(NL)**

(72) Inventor: **van de Leest, Renaat Edmond**
**c/o INT. OCTROOIBUREAU B.V. Prof. Holstlaan 6**
**NL-5656 AA Eindhoven(NL)**

(74) Representative: **Weening, Cornelis et al,**
**INTERNATIONAAL OCTROOIBUREAU B.V. Prof.**
**Holstlaan 6**
**NL-5656 AA Eindhoven(NL)**

(54) **Master suitable for the manufacture of electroplated copies.**

(57) A master suitable for the manufacture of electro-plated negative copies of metal in which the master comprises a preform (1) which on at least one side has a layer (3) of electroplated aluminium the surface of which has a desired profile as a result of a mechanical precision treatment and is coated with a titanium nitride layer (5).

EP 0 158 379 A1

PHN 10.951  1  05.11.1984  0158379

"Master suitable for the manufacture of electroplated copies".

The invention relates to a master suitable for the manufacture of electroplated negative copies of metal.

The negative metal copies are hereinafter referred to as father matrices. The father matrices are usually manufactured from nickel or copper and in turn are used for making further copies, for example, for the manufacture of positive metal copies, the so-called mother matrices. Negative son matrices are manufactured from the positive mother matrices and are used in the manufacture of synthetic resin copies or copies comprising a coating layer of a synthetic resin. Such copies are, for example, information carriers such as gramophone records, or in particular optical components such as mirrors, lenses, prisms and the like. The optical component preferably comprises a supporting member of, for example, glass or quartz, which on one side has a coating layer of, for example, a light-cured synthetic resin. The surface of the coating layer is the negative of that of the son matrix. The negative father matrix may also be used for making positive copies of a synthetic resin.

As already said, the invention relates to the master.

According to a current process of manufacturing a master for optical components, the surface of a disc which is made from an aluminium alloy is machined to the desired shape, for example, an aspherical shape. A disadvantage is that it is not possible to make the surface of an aluminium alloy super-smooth by means of a mechanical metal-removing precision treatment. The surface shows irregularities in the form of micropits. The surface has no optical quality. Another serious disadvantage is that only one father matrix can be manufactured from the master. For this purpose a metal peel, for example an Ni-peel or

a Cu-peel, is grown on the treated surface of the master by electroplating. The aluminium alloy is dissolved, the master hence being lost.

A master for gramophone records is manufactured according to a known method by providing a supporting plate, for example a metal or glass plate, on one side with a layer of lacquer in which an information track is cut by means of a chisel. The master is provided, on the side of the lacquer layer, with an electrolessly deposited metal layer, for example an Ag-layer. An Ag-layer can be provided by means of a chemical metallization process (plating process) by treating the surface, simultaneously or successively, with an aqueous silver-salt solution and an aqueous solution of a reducing agent. A thicker metal layer, for example an Ni-layer or a Cu-layer, is  provided by electroplating on the electrolessly deposited metal layer. The master plate is finally removed, the lacquer layer being damaged. In this case also the master can be used only once.

It is an object of the invention to provide a master which does not exhibit the above-mentioned problems. According to a first object the master must be reusable in the manufacture of metal copies.

According to a second object at least the surface of the master which during making metal copies contacts the copy must show an optical quality. This means that the surface must be super-smooth having a surface roughness $R_T$ of at most 0.02 $\mu$m.

A further object is that the copies derived from the master, for example, father matrix, mother matrix, son matrix, and copies of synthetic resin, have the same or substantially the same surface quality as the master.

These objects are achieved by means of a master of the type mentioned in the opening paragraph which is characterized in that the master comprises a preform which on at least one side has a layer of electroplated aluminium the surface of which has a desired profile as a result of a mechanical precision treatment and is coated with a layer of titanium nitride.

The preform is preferably manufactured from metal. Examples of suitable metals are copper or an aluminium alloy. The preform may also be made from a different material, for example, glass, quartz or a synthetic resin. Said materials do not conduct electricity. In that case the surface of the preform on which the layer of electroplated aluminium is deposited must first be made electrically conductive by providing thereon a metal layer by electroless deposition. A suitable metal layer is a silver layer provided by an electroless chemical metallization process or a vapour-deposited or sputtered layer of, for example, aluminium, copper, silver, gold or alloys thereof.

The layer of electroplated aluminium is provided according to known methods. Reference may be made to published Netherlands Patent Application no. 7812061 (PHN 9309) in the name of Applicant, and the article "Galvanische Abscheidung von Aluminium" in Philips Techn. Rundschau 39, No. 4, pp. 112-116 (1980/1981). The thickness of the electroplated aluminium layer is not restricted to narrow limits and is, for example, between 10 and 300 /um, in particular between 20 and 100 /um.

The surface of the electroplated aluminium layer has a profile which is identical to the desired profile of the synthetic resin products or synthetic resin-comprising products which are manufactured by means of the father matrix derived from the master. For example, the surface of a master for gramophone records comprises a spiral-like information track provided by means of a cutting tool, for example, a diamond chisel.

The surface of a master for optical components may have a variety of profiles in accordance with the shape of the surface of the products, for example, lenses, mirrors, prisms which are manufactured by means of the father matrix or son matrix derived from the master. The master may have, for example, a spherical surface but may alternatively be aspherical.

The desired profile is provided by means of a mechanical procision treatment, in particular a metal-removing precision treatment, for example, superfine milling or turning by means of a tool having cutting surfaces of diamond. As a result of this treatment the surface of the electroplated aluminium obtains a perfect optical quality in contrast with aluminium obtained differently. The surface has a supersmooth texture having a surface roughness ($R_T$) of at most 0.02 $\mu$m. The surface does not show any micropits. The surface roughness $R_T$ denotes the maximum peak-to-valley height.

It is known *per se* from the above-mentioned Netherlands Patent Application No. 7812062 (PHN 9309) to manufacture a supersmooth surface by a metal-removing treatment of electroplated aluminium. As a result of this high-grade mirrors, in particular infrared mirrors, can be made. In contrast with the present invention the said Netherlands Patent Application does not relate to the manufacture of a master and the associated problems of the manufacture of electroplated metal copies and the detaching of said products from the mould while maintaining the optical surface quality of both the master and of the metal copy.

According to the invention, the profiled surface of the master comprises a layer of titanium nitride. Due to the thickness of the titanium nitride layer, the profile of the surface of the layer of electroplated aluminium will change to a small extent. When making masters used in the manufacture of optical components, a suitable correction should be made in the precision treatment of the electroplated aluminium. The thickness of the titanium nitride layer is preferably 10-300 nm.

The titanium nitride is preferably provided by means of a reactive magnetron sputtering process as is described in Thin Solid Films 72, pp. 535-540, (1980). The reactive gas is nitrogen, the plasma is argon and the target is titanium.

The titanium nitride layer adheres excellently to the electroplated aluminium layer and readily follows the profile. The quality of the adhesion and the build-up of the titanium nitride layer is so good that the exposed surface of the titanium nitride layer has the same optical properties as the electroplated aluminium layer.

Titanium nitride is an extremely hard and wear-resistant material having an excellent scratch-resistivity. At normal temperature the material is not sensitive to air-oxidation and is chemically stable. For example, the material is not attacked by water or aqueous solutions of weak acids and bases.

The titanium nitride is an electric conductor so that a metal, for example Ni or Cu, can be deposited thereon directly by electroplating. For the manufacture of a negative metal copy, for example an Ni copy, the master is placed in an electroplating bath which comprises, for example, an aqueous solution of nickel sulphamate. The cathode of the bath is connected to the layer of titanium nitride. When current passes through, an Ni-peel is deposited on the titanium nitride. The Ni-peel can easily be detached from the layer of titanium nitride, the titanium nitride layer not being damaged. The quality of the master is maintained so that it can be used again for the manufacture of metal copies. The deposition of metal on the surface of titanium nitride and the subsequent detaching of the resulting metal peel are so good that the surface of the metal peel (father matrix) has the same or substantially the same optical quality as the surface of the titanium nitride layer. Further copies of the resulting father matrices can be made, for example mother matrices and son matrices. With the last-mentioned matrices, copies of a synthetic resin are made, for example, by using a compression process or a moulding process. The father matrix may also be used for making copies of a synthetic resin. All these copies have an excellent surface quality which corresponds to that of the master.

It has surprisingly been found that when a layer of titanium nitride is used having a thickness smaller than or equal to 300 nm, the layer of metal, for example Ni, deposited on the layer of titanium nitride by electroplating has the same properties, such as structure, grain
size, as a layer of Ni which has been provided directly
on a surface of electroplated aluminium. The excess voltage required to deposit Ni by electroplating is also the
same in the two above-mentioned cases. The excess voltage
is defined by the current strength equation $i = i_o e^{-kn}$.
wherein i = required current density

$i_o$ = exchange current density

k = constant, dependent on the metal which is
deposited by electroplating

n = excess voltage.

The excess voltage is determined by various
factors, such as diffusion of metal ions in the metal
plating bath, the dehydratation of the hydrated metal
ions, charge transfer, nucleation etc.

The titanium nitride layer in a thickness
$\leq$ 300 nm provided on electroplated aluminium does not
influence the electroplating of metal, in particular Ni.
The characteristic of the deposited layer of metal is not
influenced either by the titanium nitride layer. The
electroplated metal layer can be detached from the surface of titanium nitride without any problems.

In a further preferred embodiment of the master
according to the invention, a layer of titanium is present
between the layer of electroplated aluminium and the
layer of titanium nitride. The thickness of the layer of
titanium is, for example, between 2-8 nm. The layer can
be provided in a simple manner by a small adaptation of
the reactive sputtering process used to provide the titanium nitride. This adaptation involves that no nitrogen
is admitted in the first phase of the sputtering process.
The plasma is argon and the target is titanium.

The layer of titanium improves the bonding of
the titanium nitride layer to the layer of electroplated
aluminium if the aluminium has an oxide skin. During the
mechanical treatment of the electroplated aluminium which
usually takes place in ambient air an oxide skin will be

0158379

formed. Said oxide skin can be removed. In that case no intermediate layer of titanium is necessary. Since the removal of the oxide skin means an extra process step, it is to be preferred to leave the oxide skin and to provide an intermediate layer of titanium in order to obtain a good bond between the titanium nitride and the aluminium. If no intermediate layer of Ti is provided, a titanium nitride-oxide layer will be formed upon providing titanium nitride. If a metal, for example Ni, is grown on said layer by electroplating, reduction to titanium will take place. The grown metal peel does not work loose from a titanium surface.

The invention will be described in greater detail by means of an embodiment and a drawing, in which:

Fig. 1 is a cross-sectional view of a master according to the invention used in the manufacture of a negative metal copy (father matrix), and

Fig. 2 is a cross-sectional view of the father matrix obtained by using the master of Fig. 1.

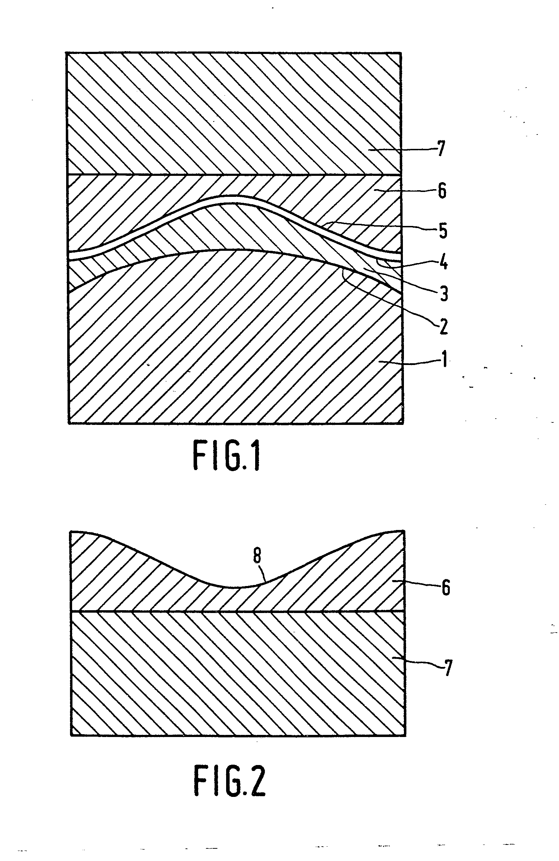

Reference numeral 1 in Fig. 1 denotes a preform manufactured from an aluminium alloy of the following composition in % by weight.

Mg 0.5 - 2.0

Si 0.5 - 1.5

Mn 0.2 - 1.5

Fe $\leqslant$ 0.4

Cu $\leqslant$ 0.5

other impurities $\leqslant$ 0.1

Al remainder.

Preform 1 has a spherical surface 2 on which an aluminium layer 3 having a thickness of 50 $\mu$m is deposited electrolytically (by electroplating). The electrolysis bath used for this purpose comprises a solution of 1.2 molar $AlCl_3$ and 0.2 molar $LiAlH_4$ in tetrahydrofuran. The electrolysis is carried out with a current density of 1A per $dm^2$. The hardness of the layer of electroplated aluminium is 70 Vickers.

The electroplated aluminium layer 3 is turned on

0158379

a precision lathe by means of a diamond chisel. An aspherical mirror surface 4 is obtained having a surface roughness $R_T$ of approximately 0.01 $\mu$m.

The surface 4 is degreased ultrasonically. The preform 1-4 is provided in a sputtering device and is subjected to a reactive triode sputtering process carried out at a voltage of 1.6 kV required to make a plasma. A Ti-target and an argon plasma at a pressure of 22.6 x $10^{-2}$ Pa are present in the device. After a short period of time $N_2$ gas is admitted to the device until a partial pressure of 4 x $10^{-2}$ Pa of nitrogen is present. As a result of the sputtering process, a thin layer of Ti, not shown, is deposited on the electroplated aluminium layer 3 in a thickness of 5 nm and a titanium nitride layer 5 having a thickness of 90 nm is provided on the Ti layer.

The exposed surface of the titanium nitride layer is supersmooth and has a surface roughness $R_T$ of 0.01 $\mu$m.

An Ni-copy (father matrix) is manufactured from the master thus obtained, by electroplating. For this purpose, the master 1-5 is placed in a nickel sulphamate bath and connected to the cathode. Upon current passage, Ni is deposited on the titanium nitride layer 5. The resulting nickel layer 6 has a thickness of 5 mm. The layer 6 is ground and provided with a supporting plate 7 of stainless steel which is adhered to the ground surface of layer 6.

The resulting father matrix 6-7 is detached from the master without any problems. The titanium nitride layer 5 remains entirely intact so that the master 1-5 can be used again for manufacturing metal copies. The father matrix 6,7 shown in Fig. 2 has an aspherical surface 8 which is the negative of the surface of the master. The surface 8 has a perfect optical quality with a surface roughness $R_T$ of approximately 0.01 $\mu$m.

0158379

CLAIMS

1.        A master suitable for the manufacture of electro-
plated negative copies of metal, characterized in that
the master comprises a preform which on at least one side
has a layer of electroplated aluminium the surface of which
has a desired profile as a result of a mechanical precision
treatment and is coated with a layer of titanium nitride.

2.        A master as claimed in Claim 1, characterized
in that the thickness of the titanium nitride layer is
between 10 and 300 nm.

3.        A master as claimed in Claim 1 or 2, characterized in that a layer of titanium is provided between the
electroplated aluminium layer and the titanium nitride
layer.

0158379

FIG.1

FIG.2

PHN 10951

0158379

European Patent
Office

EUROPEAN SEARCH REPORT

Application number

EP 85 20 0294

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 92, no. 20, May 1980, page 518, no. 171615h, Columbus, Ohio, US; & JP - A - 79 142 137 (PILOT PEN CO., LTD.) 06-11-1979 | 1 | C 25 D 1/10 |

-----

|  |  |  | TECHNICAL FIELDS SEARCHED (Int. Cl.4) |
|---|---|---|---|
|  |  |  | C 25 D |

The present search report has been drawn up for all claims

| Place of search THE HAGUE | Date of completion of the search 05-07-1985 | Examiner NGUYEN THE NGHIEP |
|---|---|---|